# EUROPEAN PATENT SPECIFICATION

(11) **EP 3 602 649 B1**
(45) Date of publication and mention of the grant of the patent: **11.10.2023**
(21) Application number: 18726056.7
(22) Date of filing: 22.03.2018
(51) Int. Cl.: H01M 10/04, H01M 10/058, H01M 50/119

(54) **ENERGY STORAGE DEVICE**
ENERGIESPEICHERVORRICHTUNG
DISPOSITIF DE STOCKAGE D'ÉNERGIE

(30) Priority: 29.03.2017 JP 2017065656
(43) Date of publication of application: 05.02.2020
(73) Proprietor: Robert Bosch GmbH, 70442 Stuttgart (DE)
(72) Inventor: NAGAMINE, Kenta, Kyoto-shi Kyoto 602-0802 (JP); KOBAYASHI, Tetsuhiro, Kyoto-shi Kyoto 601-8520 (JP); KAWASOE, Yudai, Kyoto 600-8825 (JP)
(86) International application number: PCT/EP2018/057320
(87) International publication number: WO 2018/177885

(56) References cited:
- EP-A1- 2 485 298
- KR-A- 20160 076 899
- US-A1- 2012 121 965

## Description

### TECHNICAL FIELD

The present invention relates to an energy storage device provided with an electrode assembly having a plurality of plates stacked on each other.

### BACKGROUND ART

There has been widely known an energy storage device which includes an electrode assembly having a plurality of plates stacked on each other, and where a mixture layer is formed on each plate. For example, patent document 1 discloses a stacked structure battery (energy storage device) which includes a power generating element (electrode assembly) having a plurality of positive electrodes and a plurality of negative electrodes stacked on each other, and where an active material layer (mixture layer) is formed on the positive electrode and the negative electrode respectively.

### PRIOR ART DOCUMENTS

### PATENT DOCUMENTS

Patent Document 1: JP-A-2013-191389

### SUMMARY OF THE INVENTION

### PROBLEMS TO BE SOLVED BY THE INVENTION

In the conventional energy storage device having the above-mentioned configuration, there exists a drawback that a plate is bent at the time of manufacturing the plate. When the plate is bent, an operation of forming an electrode assembly by stacking the plates becomes difficult thus giving rise to a possibility that productivity is lowered.

An object of the present invention to provide an energy storage device provided with an electrode assembly where it is possible to suppress bending of a plate.

### MEANS FOR SOLVING THE PROBLEMS

According to an aspect of the present invention, there is provided an energy storage device comprising an electrode assembly having a plurality of plates stacked on each other, wherein the plate which forms an outermost layer among the plurality of plates has a substrate and a mixture layer disposed on an inner surface of the substrate, and the electrode assembly further has a sheet member fixed to an outer surface of the substrate.

### ADVANTAGES OF THE INVENTION

According to the present invention, it is possible to provide an energy storage device provided with an electrode assembly where bending of the plate can be suppressed.

### BRIEF DESCRIPTION OF THE DRAWINGS

Fig. 1 is a perspective view showing an external appearance of an energy storage device according to an embodiment.
Fig. 2 is an exploded perspective view showing respective constitutional elements in a state where the energy storage device according to the embodiment is disassembled.
Fig. 3 is a cross-sectional view showing the internal configuration of the energy storage device according to the embodiment.
Fig. 4 is a perspective view showing the configuration where positive electrode plates, negative electrode plates and separators of the electrode assembly according to the embodiment are stacked on each other.
Fig. 5 is a plan view showing the configuration of the positive electrode plate and the negative electrode plate of the electrode assembly according to the embodiment.
Fig. 6 is a cross-sectional view showing the configuration the positive electrode plate, the negative electrode plate and the sheet member of the electrode assembly according to the embodiment.
Fig. 7A is a cross-sectional view showing the configuration of a negative electrode plate which forms an outermost layer and a sheet member of the electrode assembly according to a modification 1 of the embodiment.
Fig. 7B is a cross-sectional view showing the configuration of a positive electrode plate, a negative electrode plate which forms an outermost layer and a sheet member of the electrode assembly according to a modification 2 of the embodiment.
Fig. 7C is a cross-sectional view showing the configuration of a positive electrode plate, a negative electrode plate which forms an outermost layer and a sheet member of the electrode assembly according to a modification 3 of the embodiment.
Fig. 8A is a plan view showing the configuration of a negative electrode plate which forms an outermost layer and a sheet member according to a modification 4 of the embodiment.
Fig. 8B is a plan view showing the configuration of the negative electrode plate which forms the outermost layer and the sheet member according to the modification 4 of the embodiment.
Fig. 9 is a perspective view showing the configuration of a positive electrode plate, a negative electrode plate and a sheet member of an electrode assembly according to a modification 5 of the embodiment.
Fig. 10 is a perspective view showing the configuration of a positive electrode plate, a negative electrode plate and a sheet member of an electrode assembly according to a modification 6 of the embodiment.

### MODE FOR CARRYING OUT THE INVENTION

The inventors of the present invention have paid attention to a point that the plate is bent in manufacturing the plate in the conventional energy storage device described in patent document 1. That is, the inventors of the present invention found that, in general, in manufacturing a plate, when a mixture layer is formed on the plate, the plate is bent. When the plate is bent, there arises a drawback that the mixture layer is peeled off or the like.

To overcome such a drawback, according to an aspect of the present invention, there is provided an energy storage device comprising an electrode assembly having a plurality of plates stacked on each other, wherein the plate which forms an outermost layer among the plurality of plates has a substrate and a mixture layer disposed on an inner surface of the substrate, and the electrode assembly further has a sheet member fixed to an outer surface of the substrate.

In the energy storage device having such a configuration, the mixture layer is disposed on the inner surface of the substrate with respect to the plate of the outermost layer among the plurality of plates which the electrode assembly has, and the sheet member is fixed to the outer surface of the substrate. With such a configuration, even when the mixture layer formed on the inner surface of the substrate intends to bend the plate, the sheet member on the outer surface of the substrate resists against a force which intends to bend the plate so that bending of the plate can be suppressed.

The plate which forms the outermost layer is formed such that, in a state where the sheet member is fixed to the plate, a ratio of a stress when a load is applied to the plate from a sheet member side with respect to a stress when a load is applied to the plate from a mixture layer side in a bending test is set to 0.5 to 2 inclusive.

With such a configuration, the plate which forms the outermost layer and to which the sheet member is fixed exhibits 0.5 to 2 inclusive as the ratio of the stress when a load is applied to the plate from the sheet member side with respect to the stress when a load is applied to the plate from a mixture layer side in a bending test. Accordingly, a force which intends to warp the plate which forms the outermost layer toward a mixture layer side and a force which intends to warp the plate toward a sheet member side are relatively well-balanced with each other and hence, the bending of the plate can be suppressed more effectively.

The sheet member may have a first projecting portion projecting from an end portion of the substrate.

In the above-mentioned configuration, to suppress the bending of the plate, it is preferable that the sheet member also cover an end portion of the substrate. For this end, it is preferable that the sheet member be formed so as to considerably largely project from the end portion of the substrate. In this manner, the sheet member projects from the end portion of the substrate so that the sheet member can cover also the end portion of the substrate whereby bending of the plate can be suppressed.

The first projecting portion may have a second projecting portion projecting toward an inner surface side of the substrate.

With such a configuration, the end portion of the sheet member projects toward the inner surface side of the substrate and hence, a strength of the end portion can be enhanced without projecting the end portion to the outside. Accordingly, bending of the plate can be suppressed more efficiently while realizing the miniaturization of the electrode assembly.

The sheet member may be formed such that the end portion of the sheet member has a larger thickness than a center portion of the sheet member.

With such a configuration, the end portion of the sheet member is formed thicker than the center portion of the sheet member and hence, bending of the plate can be suppressed more effectively.

The sheet member may include: a first sheet portion fixed to an outer surface of the substrate of the plate forming one outermost layer among the plurality of plates; and a second sheet portion fixed to an outer surface of the substrate of the plate forming the other outermost layer among the plurality of plates, wherein the first sheet portion and the second sheet portion may be integrally formed with each other.

With such a configuration, the first sheet portion and the second sheet portion are fixed to the outer surfaces of the substrates of the plates which form the outermost layers on both outer sides of the electrode assembly, and the first sheet portion and the second sheet portion disposed on both outer sides of the electrode assembly are integrally formed with each other. Accordingly, by integrally forming two sheet portions on both outer sides of the electrode assembly, the number of parts can be reduced, and the configuration of the electrode assembly can be simplified.

A thickness of the sheet member may be set thinner than a thickness of the mixture layer.

With such a configuration, the thickness of the sheet member is set thinner than the thickness of the mixture layer and hence, it is possible to suppress the increase of the thickness of the electrode assembly whereby the miniaturization of the energy storage device can be realized.

Hereinafter, energy storage devices according to an embodiment of the present invention and modifications of the embodiment are described with reference to drawings. The embodiment and the modifications of the embodiment described hereinafter are comprehensive and specific examples of the present invention. In the embodiment and the modifications of the embodiment described hereinafter, numerical values, shapes, materials, constitutional elements, the arrangement positions and connection states of the constitutional elements and the like are merely examples, and these are not intended to be used for limiting the present invention. Further, out of the constitutional elements in the embodiment and the modifications of the embodiment described hereinafter, the constitutional elements which are not described in independent claims describing an uppermost concept are described as arbitrary constitutional elements. In the respective drawings, the respective constitutional elements are not described strictly accurately in size or the like.

In the description made hereinafter and drawings, an opposedly facing direction of long side surfaces of a container, a lateral direction of a short side surface of the container, a thickness direction of the container, or a stacking direction of plates of an electrode assembly is defined as an X axis direction. An arrangement direction of a pair of current collectors which an energy storage device includes, an arrangement direction of a pair of electrode terminals, an arrangement direction of tabs of a pair of electrode assemblies, a lateral direction of the electrode assembly, or an opposedly facing direction of short side surfaces of the container is defined as a Y axis direction. Further, an arrangement direction of a container body and a lid of the energy storage device, a longitudinal direction of the long side surface of the container, a longitudinal direction of the short side surface of the container, a longitudinal direction of the electrode assembly, or a vertical direction is defined as a Z axis direction. These X axis direction, Y axis direction, and Z axis direction are directions intersecting with each other (orthogonal to each other in this embodiment). There may be also a case where the Z axis direction does not agree with the vertical direction depending on a use state of the energy storage device. However, in the description made hereinafter, for the sake of convenience, the description is made by assuming that the Z axis direction agrees with the vertical direction. Further, in the description made hereinafter, a plus side in the X axis direction indicates an arrow direction side of an X axis, and a minus side in the X axis direction indicates a side opposite to the plus side in the X axis direction. The same goes also for the Y axis direction and the Z axis direction.

### (Embodiment)

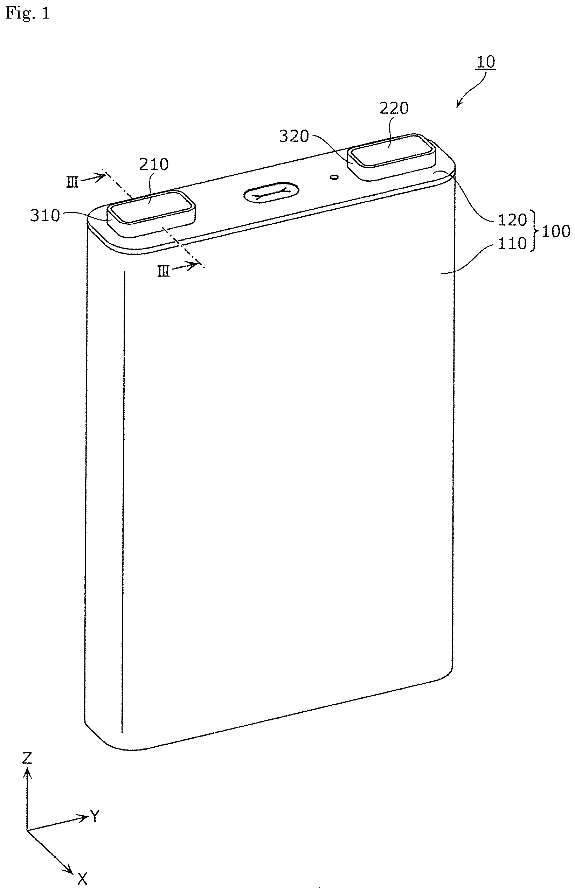

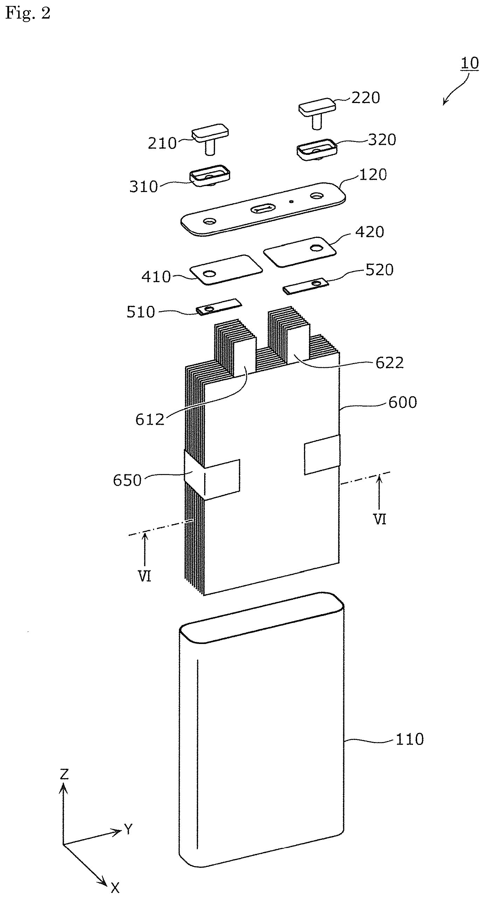

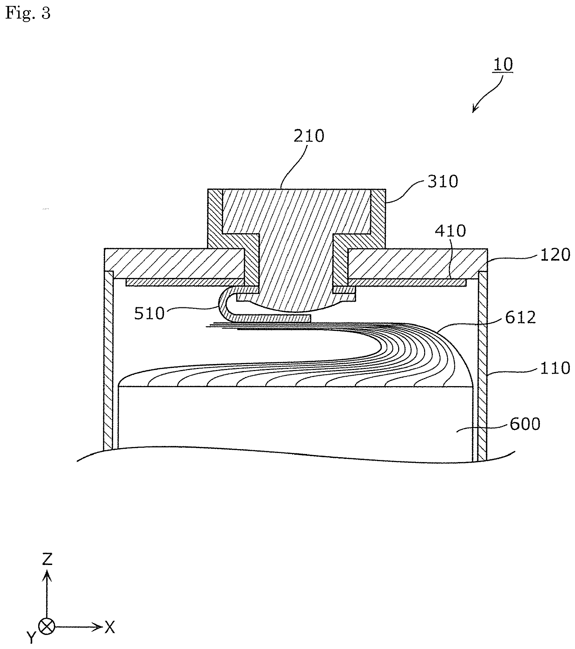

First, an overall configuration of an energy storage device 10 according to an embodiment of the present invention is described with reference to Fig. 1 to Fig. 3. Fig. 1 is a perspective view showing an external appearance of the energy storage device 10 according to this embodiment. Fig. 2 is an exploded perspective view showing respective constitutional elements in a state where the energy storage device 10 according to this embodiment is disassembled. Further, Fig. 3 is a cross-sectional view showing an internal configuration of the energy storage device 10 according to this embodiment. Here, Fig. 3 is a cross-sectional view showing a configuration around a positive electrode terminal 210 when the energy storage device 10 shown in Fig.1 is cut along a plane parallel to an XZ plane including a line III-III.

The energy storage device 10 is a secondary battery which can charge electricity or discharge electricity. To be more specific, the energy storage device 10 is a nonaqueous electrolyte secondary battery such as a lithium ion secondary battery. The energy storage device 10 is applicable to a power source for an automobile such as an electric vehicle (EV), a hybrid electric vehicle (HEV), a plug-in hybrid electric vehicle (PHEV) or the like, a power source for electronic equipment, a power source for power storage application, for example. The energy storage device 10 is not limited to a nonaqueous electrolyte secondary battery, and may be a secondary battery other than a nonaqueous electrolyte secondary battery, or may be a capacitor and, further, the energy storage device 10 may be a primary battery where a user can use stored electricity without charging.

As shown in Fig. 1, the energy storage device 10 includes a container 100, a positive electrode terminal 210, a negative electrode terminal 220, a positive electrode upper gasket 310, a negative electrode upper gasket 320. Further, as shown in FIG. 2, a positive electrode lower gasket 410, a negative electrode lower gasket 420, a positive electrode current collector 510, a negative electrode current collector 520, and an electrode assembly 600 are accommodated in the inside of the container 100. Although an electrolyte solution (non-aqueous electrolyte) is sealed in the container 100, the illustration of such an electrolyte solution is omitted. As the electrolyte solution sealed in the container 100, a kind of the electrolyte solution is not particularly limited and various kinds of electrolyte solutions can be selected provided that performance of the energy storage device 10 is not impaired.

The container 100 is formed of a container body 110 which has a bottomed rectangular cylindrical shape; and a lid body 120 which is a plate-like member for closing an opening of the container body 110. The container 100 is configured such that the inside of the container 100 can be hermetically sealed by joining the lid body 120 and the container body 110 to each other by welding or the like after an electrode assembly 600 and the like are accommodated in the inside of the container 100. The container 100 is made of weldable metal such as stainless steel, aluminum or an aluminum alloy, for example. Although a solution poring portion for pouring an electrolyte solution into the inside of the container 100 and a gas release valve for releasing a gas in the inside of the container 100 when an internal pressure of the container 100 is increased are disposed on the lid body 120, the detailed description of these components is omitted.

The positive electrode terminal 210 is an electrode terminal which is electrically connected to a positive electrode plate of the electrode assembly 600 via the positive electrode current collector 510. The negative electrode terminal 220 is an electrode terminal which is electrically connected to a negative electrode plate of the electrode assembly 600 via the negative electrode current collector 520. That is, the positive electrode terminal 210 and the negative electrode terminal 220 are metal-made electrode terminals through which electricity stored in the electrode assembly 600 is discharged to a space outside the energy storage device 10, and through which electricity is introduced into a space inside the energy storage device 10 for storing the electricity in the electrode assembly 600. As shown in Fig. 3, the positive electrode terminal 210 and the negative electrode terminal 220 are connected to the positive electrode current collector 510 and the negative electrode current collector 520 respectively by swaging or the like. The positive electrode terminal 210 and the negative electrode terminal 220 are made of aluminum, an aluminum alloy or the like.

The electrode assembly 600 is an energy storage element (power generating element) which includes positive electrode plates (positive electrode plates 610 described later), negative electrode plates (negative electrode plates 620 described later), and separators (separators 630 described later), and can store electricity. To be more specific, the electrode assembly 600 is formed such that the separator 630 is sandwiched between the positive electrode plate 610 and the negative electrode plate 620 in a layered manner. With such a configuration, in the electrode assembly 600, tabs 612 of the positive electrode plates 610 are stacked to each other, and the tabs 622 of the negative electrode plates 620 are stacked to each other.

The electrode assembly 600 further includes a fixing member 650 which fixes the positive electrode plates 610 and the negative electrode plates 620. The fixing member 650 is disposed on both sides of the electrode assembly 600 in the Y axis direction on one by one basis, and fixes the stacked positive electrode plates 610 and the negative electrode plates 620 by sandwiching the positive electrode plates 610 and the negative electrode plates 620 in a stacking direction (X axis direction) of the positive electrode plates 610 and the negative electrode plates 620. To be more specific, the fixing members 650 are insulating tapes which are wound in a U shape around end portions of the electrode assembly 600 in the Y axis direction so as to surround the end portions respectively.

The fixing member 650 may be disposed at plural portions on both sides of the electrode assembly 600 in the Y axis direction. A material for forming the insulating tape used as the fixing member 650 is not particularly limited provided that a tape having insulation property is used. The fixing member 650 is not limited to the insulating tape, and a conductive tape may be used as the fixing member 650 provided that insulation between the positive electrode plate 610 and the negative electrode plate 620 can be ensured by an insulation sheet or the like. Further, as the fixing member 650, for example, a plate-like member having rigidity or the like may be used in place of a tape. The detailed configuration of the electrode assembly 600 is described later.

The positive electrode current collector 510 and the negative electrode current collector 520 are formed of plate-like members each having a U shape as viewed in a side view which are disposed between the electrode assembly 600 and the lid body 120 of the container 100, and electrically connect the electrode assembly 600 and the positive electrode terminal 210 to each other and the electrode assembly 600 and the negative electrode terminal 220 to each other respectively. As shown in Fig. 3, the positive electrode current collector 510 is joined to the plurality of stacked tabs 612 on a positive electrode side of the electrode assembly 600 by welding or the like, and the negative electrode current collector 520 is joined to the plurality of stacked tabs 622 on a negative electrode side of the electrode assembly 600 by welding or the like. The positive electrode current collector 510 is made of aluminum or an aluminum alloy, and the negative electrode current collector 520 is made of copper, a copper alloy or the like.

The positive electrode upper gasket 310 and the negative electrode upper gasket 320 are an insulating sealing member disposed between the lid body 120 of the container 100 and the positive electrode terminal 210 and an insulating sealing member disposed between the lid body 120 of the container 100 and the negative electrode terminal 220 respectively. The positive electrode upper gasket 310 and the negative electrode upper gasket 320 are formed so as to cover lower portions and side portions of the positive electrode terminal 210 and the negative electrode terminal 220 respectively. The positive electrode lower gasket 410 and the negative electrode lower gasket 420 are a flat-plate-like insulating sealing member disposed between the lid body 120 and the positive electrode current collector 510 and a flat-plate-like insulating sealing member disposed between the lid body 120 and the negative electrode current collector 520 respectively. These gaskets are made of polycarbonate (PC), polypropylene (PP), polyethylene (PE), a polyphenylene sulfide resin (PPS) or the like.

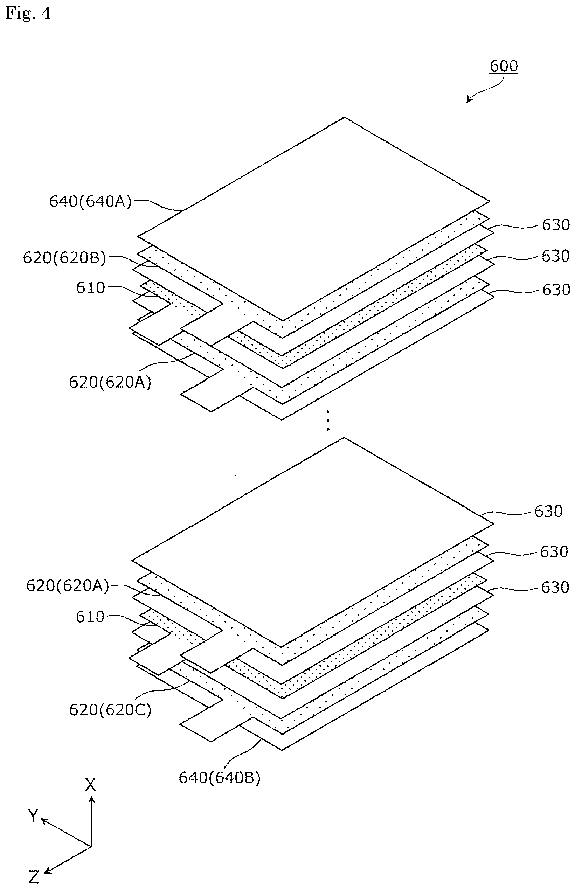

Next, the configuration of the electrode assembly 600 is described in detail. Fig. 4 is a perspective view showing the configuration of the electrode assembly 600 according to this embodiment where the positive electrode plates 610, the negative electrode plates 620, and the separators 630 are stacked to each other.

As shown in Fig. 4, the electrode assembly 600 is formed by stacking the positive electrode plates 610, the negative electrode plates 620, and the separators 630 to each other. The positive electrode plates 610 and the negative electrode plates 620 are respectively formed of a flat-plate-like rectangular-shaped electrode plate which is formed by forming a mixture layer on a metal foil and is elongated in the Z axis direction. Further, the separators 630 are respectively formed of a microporous sheet made of a resin, for example. The negative electrode plate 620 has a shape one size larger than the positive electrode plate 610, and the separator 630 has a shape one size larger than the negative electrode plate 620. As a material for forming the separator 630, a non-woven fabric or the like can be used, for example, and a known material can be suitably used provided that performance of the energy storage device 10 is not impaired.

Out of the plurality of negative electrode plates 620, the negative electrode plates 620 other than the negative electrode plates 620 forming the outermost layers are assumed as the negative electrode plates 620A, and the negative electrode plates 620 forming the outermost layers are assumed as the negative electrode plates 620B, 620C. The negative electrode plate 620B is the negative electrode plate 620 forming the uppermost layer (on an end portion on a plus side in the X axis direction), the negative electrode plate 620C is the negative electrode plate 620 forming a lowermost layer (on an end portion on a minus side in the X axis direction). That is, the negative electrode plates 620B, 620C are plates forming outermost layers out of the plurality of plates (the positive electrode plates 610 and the negative electrode plates 620) which the electrode assembly 600 includes. Further, the positive electrode plates 610 and the negative electrode plates 620A are plates other than the plates forming the outermost layers out of the plurality of plates which the electrode assembly 600 includes.

Further, the electrode assembly 600 further includes two sheet members 640 (sheet members 640A and 640B) at positions sandwiching all of the positive electrode plates 610, the negative electrode plates 620, and the separators 630 therebetween. That is, the sheet member 640A is disposed outside (above) the negative electrode plate 620B forming the outermost layer (uppermost layer), and the sheet member 640B is disposed outside (below) the negative electrode plate 620C forming the outermost layer (lowermost layer).

To be more specific, the sheet member 640A is a rectangular-shaped sheet-like member which is fixed to an outer surface (upper surface) of the negative electrode plate 620B. Further, the sheet member 640B is a rectangular-shaped sheet-like member which is fixed to an outer surface (lower surface) of the negative electrode plate 620C. It is preferable that these sheet members 640A and 640B be made of a material which does not electrochemically react with lithium ions, and more preferably be made of a material having insulation property and heat resistance property such as a resin. For example, the sheet members 640A and 640B are made of PC, PP, PE, PPS or the like. The detailed configurations of the sheet members 640 (the sheet members 640A and 640B) are described later.

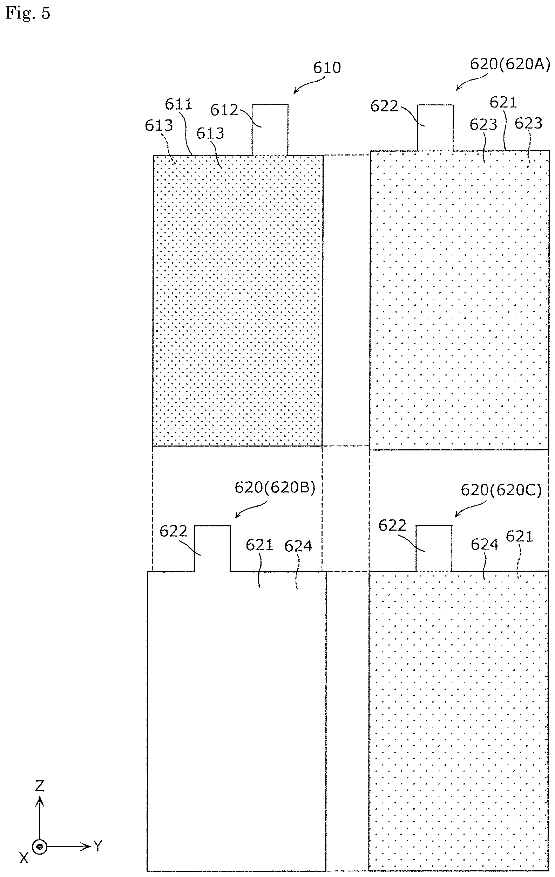

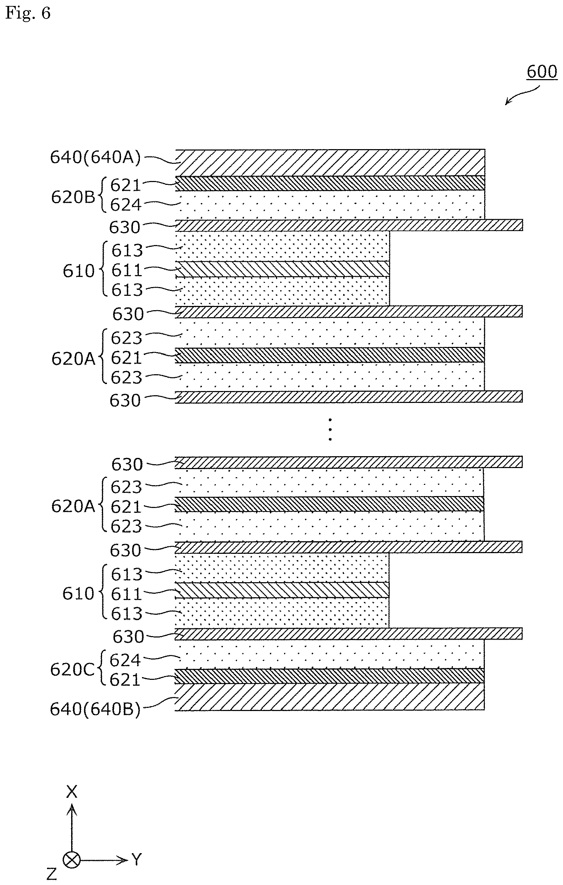

Next, the configurations of the positive electrode plates 610, the negative electrode plates 620 (the negative electrode plates 620A, 620B, 620C) and the sheet members 640 which the electrode assembly 600 includes are described in detail. Fig. 5 is a plan view showing the configurations of the positive electrode plate 610 and the negative electrode plate 620 of the electrode assembly 600 according to this embodiment. Fig. 6 is a cross-sectional view of the configurations of the positive electrode plates 610, the negative electrode plates 620, and the sheet members 640 of the electrode assembly 600 according to this embodiment. To be more specific, Fig. 6 is a cross-sectional view showing the configurations of the positive electrode plates 610, the negative electrode plates 620, and the sheet members 640 when the electrode assembly 600 shown in Fig. 2 is cut along a plane parallel to the XY plane including a line VI-VI.

As shown in Fig. 5 and Fig. 6, the positive electrode plates 610 each have a positive electrode substrate 611 which is a flat-plate-like rectangular-shaped current collecting foil made of aluminum, an aluminum alloy or the like. Further, the negative electrode plates 620 (negative electrode plates 620A, 620B, 620C) each have a negative electrode substrate 621 which is a flat-plate-like rectangular-shaped current collecting foil made of copper, a copper alloy or the like. The negative electrode substrate 621 has a shape one size larger than the positive electrode substrate 611. As a material for forming the above-mentioned current collecting foils, a known material such as nickel, iron, stainless steel, titanium, calcinated carbon, conductive polymer, conductive glass, an Al-Cd alloy or the like can be also suitably used.

Each positive electrode substrate 611 has a rectangular-shaped tab 612 projecting toward a plus side in the Z axis direction. Each negative electrode substrate 621 has a rectangular-shaped tab 622 projecting toward a plus side in the Z axis direction. By stacking the plurality of positive electrode plates 610 and the plurality of negative electrode plates 620, the plurality of tabs 612 are stacked to each other and the plurality of tabs 622 are stacked to each other. As a result, a bundle of tabs on a positive electrode side formed of the plurality of tabs 612 and a bundle of tabs on a negative electrode side formed of the plurality of tabs 622 are formed on the electrode assembly 600. The bundle of tabs on the positive electrode side and the bundle of tabs on the negative electrode side are respectively joined to the positive electrode current collector 510 and the negative electrode current collector 520 by welding or the like thus being electrically connected to the positive electrode terminal 210 and the negative electrode terminal 220 respectively.

The positive electrode plate 610 further has a positive electrode mixture layer 613 disposed on a surface of the positive electrode substrate 611. To be more specific, the positive electrode plate 610 has the positive electrode mixture layer 613 on an outer surface and an inner surface (both upper and lower surfaces) of the positive electrode substrate 611 respectively. Further, the positive electrode mixture layer 613 includes a positive active material, a conductive assistant, and a binder.

As the positive active material used in the positive electrode mixture layer 613, a known material can be suitably used provided that the material is a positive active material capable of occluding and discharging lithium ions. For example, as the positive active material, a polyanion compound such as LiMPO₄, LiMSiO₄, LiMBOs (M indicating one kind or two or more kinds of transition metal elements selected from Fe, Ni, Mn, Co and the like), lithium titanate, spinel-type lithium-manganese oxide such as LiMn₂O₄, LiMn_{1.5}Ni_{0.5}O₄, lithium transition metal oxide such as LiMO₂ (M indicating one kind or two or more kinds of transition metal elements selected from Fe, Ni, Mn, Co and the like) or the like can be used.

A kind of the conductive assistant used for the positive electrode mixture layer 613 is not particularly limited, and the conductive assistant may be made of metal or non-metal. Further, as the binder used for the positive electrode mixture layer 613, a king of the binder is not particularly limited provided that the binder is made of a material which is stable with respect to a solvent and an electrolyte solution used at the time of manufacturing an electrode and is stable with respect to oxidation-reduction reaction at the time of charging and discharging.

The negative electrode plate 620 further includes a negative electrode mixture layer 623 or 624 formed on a surface of the negative electrode substrate 621. To be more specific, the negative electrode plates 620A other than the negative electrodes forming the outermost layers each have a negative electrode mixture layer 623 on an outer surface and an inner surface (both upper and lower surfaces) of the negative electrode substrate 621. The negative electrode plate 620B forming the outermost layer (uppermost layer) does not have a negative electrode mixture layer 624 on an outer surface (upper surface) of the negative electrode substrate 621 thereof but has a negative electrode mixture layer 624 on an inner surface (lower surface) of the negative electrode substrate 621 thereof. The negative electrode plate 620C forming the outermost layer (lowermost layer) does not have a negative electrode mixture layer 624 on an outer surface (lower surface) of the negative electrode substrate 621 thereof but has a negative electrode mixture layer 624 on an inner surface (an upper surface) of the negative electrode substrate 621 thereof. That is, the negative electrode mixture layer 624 is disposed on the inner surface of the negative electrode substrate 621.

In this manner, while the negative electrode plate 620A is formed of a both surface applied having the negative electrode mixture layer 623 on both surface, that is, an outer surface and an inner surface of negative electrode substrate 621, the negative electrode plates 620B and 620C are formed of a single side applied plate having a negative electrode mixture layer 624 only on an inner surface of the negative electrode substrate 621. Here, when a mixture is applied by coating to outer surfaces of the negative electrode plates 620B and 620C which form outermost layers, there arise drawbacks that, due to the mixture on the outer surface, a gas is generated in the energy storage device 10 so that the container 100 is bulged, an electrolyte solution is consumed, and irreversible capacity of the energy storage device 10 is increased. Accordingly, by forming the negative electrode plates 620B and 620C which form the outermost layers using a one-side coating plate where the negative electrode mixture layer 624 is applied by coating only to an inner surface, the occurrence of such drawbacks can be suppressed.

Both the negative electrode mixture layers 623, 624 contain a negative active material, a conductive assistant, and a binder respectively. As the negative active material used in the negative electrode mixture layers 623, 624, a known material can be suitably used provided that the material is a negative active material capable of occluding and discharging lithium ions. For example, as the negative active material, besides lithium metal and a lithium alloy (lithium-silicon, lithium-aluminum, lithium-lead, lithium-tin, lithium-aluminum-tin, lithium-gallium, and a lithium metal containing alloy such as a Wood alloy), an alloy which can occlude and discharge lithium, a carbon material (for example, graphite, hardly graphitizable carbon, easily graphitizable carbon, low-temperature calcinated carbon, amorphous carbon or the like), silicon oxide, metal oxide, lithium metal oxide (Li₄Ti₅O₁₂ or the like), and polyphosphoric acid compound, a compound of transition metal and Groups 14 to 16 elements such as Co₃O₄ or Fe₂P which is generally referred to as a conversion negative electrode or the like can be named. Further, the conductive assistant and the binder used for the negative electrode mixture layers 623, 624 are substantially equal to the conductive assistant and the binder used for the positive electrode mixture layer 613 and hence, their detailed description is omitted.

Next, the sheet members 640 (the sheet members 640A and 640B) are described in detail. As shown in Fig. 6, the sheet member 640A has the same shape and the same size as the negative electrode substrate 621 of the negative electrode plate 620B, and is fixed to an outer surface (upper surface) of the negative electrode substrate 621. For example, the sheet member 640A can be fixed to the outer surface of the negative electrode substrate 621 by adhesion using an adhesive agent, a double-sided adhesive tape or the like, by welding (thermal welding) or the like. The sheet member 640B has the same shape and the same size as the negative electrode substrate 621 of the negative electrode plate 620C, and is fixed to an outer surface (a lower surface) of the negative electrode substrate 621. The sheet member 640B can be also fixed to the outer surface of the negative electrode substrate 621 by the same method as the sheet member 640A.

In a state where the sheet member 640A, 640B is fixed to the negative electrode plate 620B, 620C, a ratio of a stress (F2) generated when a load is applied from a sheet member 640A or 640B side with respect to a stress (F1) generated when a load is applied from a negative electrode mixture layer side in a bending test in a state where the sheet member 640 is fixed to the plate is set to 0.5 to 2 inclusive. With such a configuration, a force which intends to bend the negative electrode plate 620B, 620C toward the negative electrode mixture layer 624 side and a force which intends to bend the negative electrode plate 620B, 620C toward the sheet member 640A, 640B side are relatively well-balanced with each other and hence, the negative electrode plate 620B, 620C is minimally bent toward either one side. A ratio of F2 with respect to F1 may be set to 0.6 to 1.8 inclusive, 0.7 to 1.4 inclusive, 0.8 to 1.2 inclusive, 0.9 to 1.1 inclusive, or 0.95 to 1.05 inclusive. It is preferable that the ratio of F2 with respect to F1 is as close as possible to 1.

In the bending test, a negative electrode plate is placed on two support plates, a load is applied to a center portion of the negative electrode plate between two support plates by an indenter, and a force acting on the indenter is measured. To be more specific, first, a negative electrode plate having a length of 34mm and a width of 42mm, two support plates each having a thickness of 4mm and having a distal end thereof formed into a circular arc shape with a radius of 2mm, and an indenter having the same configuration as the support plate are prepared. Then, two support plates are arranged parallel to each other at a distance of 14mm with reference to the center in the thickness direction, and one negative electrode plate is placed on the two support plates uniformly. Then, using the indenter, a load is applied to the center portion of the negative electrode plate (an intermediate position between two support plates) from a side opposite to the support plates at a speed of 30 mm/minute until the negative electrode plate is deformed by 15 mm in a thickness direction, and a force acting on the indenter at this point of time is measured using a force gauge. A maximum value of a force acting on the indenter at this point of time is set as a stress in the bending test. With respect to the plates of the assembled energy storage device, the plate is prepared by the following steps. First, the energy storage device is disassembled in a dry atmosphere, and the plate is taken out from the energy storage device. Next, the plate is cleaned using dimethyl carbonate and, thereafter, the plate is dried in vacuum for two or more hours. Then, the plate is cut to the above-mentioned predetermined size (length: 34 mm, width: 42 mm), and the above-mentioned bending test is performed using such a plate.

It is preferable that the thicknesses of the sheet members 640A, 640B be thinner (smaller) than the thicknesses of the negative electrode mixture layers 624 of the negative electrode plates 620B, 620C, and rigidity of the sheet members 640A, 640B be higher than the rigidity of the negative electrode mixture layers 624 of the negative electrode plates 620B, 620C. When the negative electrode mixture layer 624 of the negative electrode plate 620B and the negative electrode mixture layer 624 of the negative electrode plate 620C are made of different materials, and the negative electrode mixture layer 624 of the negative electrode plate 620B and the negative electrode mixture layer 624 of the negative electrode plate 620C differ from each other in thickness and rigidity, it is sufficient that a thickness of the sheet member 640A is set smaller than the thickness of the negative electrode mixture layer 624 of the negative electrode plate 620B and a rigidity of the sheet member 640A is set higher than a rigidity of the negative electrode mixture layer 624 of the negative electrode plate 620B. In this case, it is sufficient that a thickness of the sheet member 640B is smaller than a thickness of the negative electrode mixture layer 624 of the negative electrode plate 620C and a rigidity of the sheet member 640B is set higher than a rigidity of the negative electrode mixture layer 624 of the negative electrode plate 620C.

The negative electrode mixture layer 623 of the negative electrode plate 620A has substantially the same thickness and rigidity as the negative electrode mixture layers 624 of the negative electrode plates 620B, 620C. Accordingly, thicknesses of the sheet members 640a, 640B are smaller than the thickness of the negative electrode mixture layer 623 of the negative electrode plate 620A, and the rigidity of the sheet members 640a, 640B is higher than the rigidity of the negative electrode mixture layer 623 of the negative electrode plate 620A. In the same manner, the thicknesses of the sheet members 640A, 640B are smaller than the thickness of the positive electrode mixture layer 613 of the positive electrode plate 610, and the rigidity of the sheet members 640A, 640B are higher than the rigidity of the positive electrode mixture layer 613 of the positive electrode plate 610.

The thickness of the sheet member 640 or the negative electrode mixture layer 624 means a thickness (height) of the sheet member 640 or the negative electrode mixture layer 624 in the X axis direction. For example, while a thickness of the negative electrode mixture layer 624 is approximately 120 µm, a thickness of the sheet member 640A or 640B is approximately 115 µm. Accordingly, the sheet member 640A or 640B is smaller than the negative electrode mixture layer 624 by approximately 5 µm. Whether or not the sheet member is smaller (thinner) than the negative electrode mixture layer can be determined in accordance with the following steps. The energy storage device is disassembled, the plate is cleaned using a solvent with which the sheet member and the mixture layer are not changed in quality, the sheet member and the mixture layer are dried and, thereafter, the thicknesses are suitably measured by a known method, and the measured thicknesses are compared with each other.

The thickness of the sheet member 640 may be set to 1000 µm or below, preferably be set to 500 µm or below, more preferably be set to 300 µm and, particularly preferably set to 200 µm or below. The thickness of the sheet member 640 is preferably set to 150 µm or below, and more preferably be set to 100 µm or below. With the above-mentioned thicknesses, the electrode assembly can be formed with a small thickness and hence, energy density of the energy storage device can be enhanced. The thickness of the sheet member 640 may be set to 50 µm or more, preferably set to 70 µm or more, and more preferably set to 80 µm or more. With such a thickness or more, rigidity of the sheet member 640 can be enhanced. The upper limit and the lower limit of the above-mentioned thicknesses can be arbitrarily combined with each other.
"a rigidity is high" means a state where the sheet member strongly resists against an external force, for example, a state where a change in size is small against a bending force or a twisting force. That is, for example, "the sheet member 640 has a rigidity higher than the negative electrode mixture layer 624" means the case where when the center portion of sheet member 640 and the center portion of the negative electrode mixture layer 624 having the same area are pushed by the same force, a change in size (deflection amount) of the sheet member 640 is smaller than that of the negative electrode mixture layer 624. In other words, with respect to a force necessary for bringing the same change in size, a force necessary for bringing such a change in the sheet member 640 is larger than a force necessary for bringing such a change in the negative electrode mixture layer 624. The definition of rigidity is not limited to the above-mentioned definition, and rigidity may be defined within the scope that a person skilled in the art can usually understand.

The negative electrode plates 620B, 620C to which the sheet members 640A, 640B are fixed respectively can be manufactured as follows. First, a predetermined amount of negative active material, a predetermined amount of conductive assistant, and a predetermined amount of binder are mixed and kneaded with each other thus preparing a negative electrode mixture. Then, the prepared negative electrode mixture is applied by coating to an inner surface of the negative electrode substrate 621 and is dried and, thereafter, the sheet member 640 is adhered to an outer surface of the negative electrode substrate 621 and, at the same time, a roll press is performed. Then, the negative electrode mixture is dried in vacuum so that moisture is removed thus forming the negative electrode mixture layer 624. The sheet member 640 may be formed before the negative electrode mixture layer is formed on the negative electrode substrate 621.

As has been described above, according to the energy storage device 10 of the embodiment of the present invention, with respect to the negative electrode plates 620B, 620C forming the outermost layers out of the plurality of plates which the electrode assembly 600 includes, the negative electrode mixture layer 624 is disposed on the inner surface of the negative electrode substrate 621, and the sheet member 640 is fixed to the outer surface of the negative electrode substrate 621. With such a configuration, even when the mixture layer intends to bend the plate when the mixture layer on the inner surface of the negative electrode substrate 621 is pressed, the sheet member 640 on the outer surface of the negative electrode substrate 621 resists against a force which intends to bend the plate so that bending of the negative electrode plates 620B, 620C can be suppressed. Further, in the case where the sheet member 640 has an insulation property, the sheet member 640 functions also as an insulation sheet which covers the plurality of plates from both sides of the plurality of plates.

In a state where the sheet member 640A, 640B is fixed to the negative electrode plates 620B, 620C, a ratio of a stress (F2) generated when a load is applied from a sheet member 640A or 640B side with respect to a stress (F1) generated when a load is applied from a negative electrode mixture layer side in a bending test in a state where the sheet member 640 is fixed to the plate is set to 0.5 to 2 inclusive. With such a configuration, a force which intends to bend the negative electrode plates 620B, 620C toward the negative electrode mixture layer 624 side and a force which intends to bend the negative electrode plates 620B, 620C toward the sheet member 640A, 640B side are relatively well-balanced with each other and hence, the bending of the negative electrode plates 620B, 620C is suppressed more effectively.

The sheet member 640 formed on the outer surface of the negative electrode substrate 621 has higher rigidity than the negative electrode mixture layer 624 formed on the inner surface of the negative electrode substrate 621. Accordingly, even when the negative electrode mixture layer 624 intends to bend the negative electrode plate 620B, 620C, the sheet member 640 strongly resists against a force which intends to bend the plate so that bending of the negative electrode plates 620B, 620C can be further suppressed.

The thickness of the sheet member 640 is set smaller than the thickness of the negative electrode mixture layer 624 and hence, it is possible to suppress the increase of the thickness of the electrode assembly 600 whereby the miniaturization of the energy storage device 10 can be realized.

### (Modification 1)

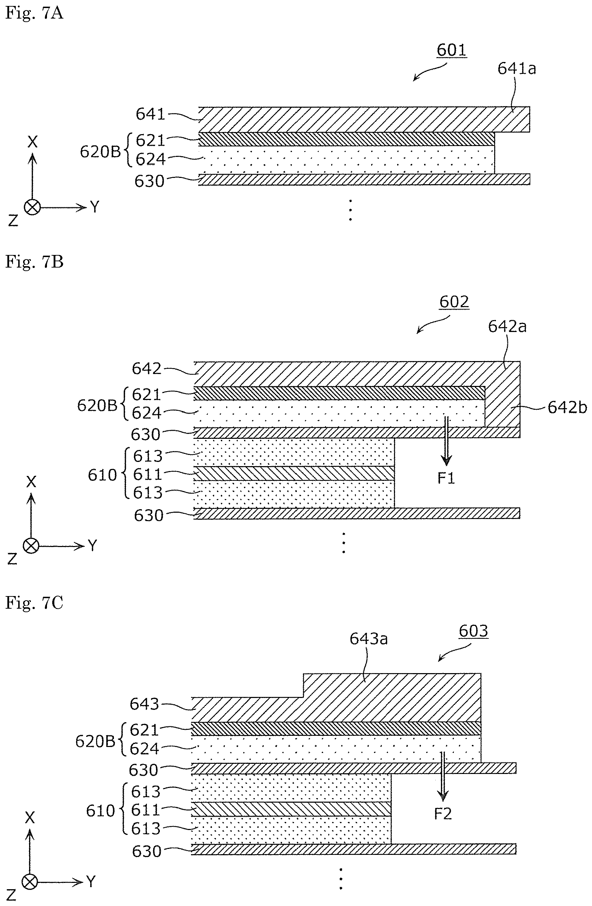

Next, a modification 1 of the above-mentioned embodiment is described. Fig. 7A is a cross-sectional view showing the configuration of a negative electrode plate 620 which forms an outermost layer and a sheet member 641 of an electrode assembly 601 according to a modification 1 of the embodiment. To be more specific, Fig. 7A is a view corresponding to the configuration of the negative electrode plate 620B which forms the outermost layer and the sheet member 640 (640A) of the electrode assembly 600 shown in Fig. 6.

As shown in Fig. 7A, the electrode assembly 601 includes a sheet member 641 in place of the sheet member 640 of the electrode assembly 600 in the above-mentioned embodiment. The modification 1 is substantially equal to the above-mentioned embodiment with respect to other configurations.

In this modification 1, the sheet member 641 has a first projecting portion 641a projecting from an end portion of a negative electrode substrate 621. The first projecting portion 641a is a portion extending from the end portion of the negative electrode substrate 621 in a direction along the negative electrode substrate 621 (on a plus side in a Y axis direction in Fig. 7A). That is, the first projecting portion 641a of the sheet member 641 is formed by extending the end portion of the sheet member 640 in the above-mentioned embodiment in the direction along the negative electrode substrate 621. The first projecting portion 641a may be formed over the whole circumference (all four sides) of the sheet member 641, or may be formed only on a portion of the whole circumference (two sides, one side, a portion of one side or the like).

As described above, according to the energy storage device of this modification, the modification can acquire substantially the same advantageous effects as the above-mentioned embodiment. Particularly, in this modification, the sheet member 641 has a first projecting portion 641a. In this modification, to suppress bending of the negative electrode plate 620B, it is preferable that the sheet member 641 cover the negative electrode substrate 621 including the end portion of the negative electrode substrate 621. For this end, it is preferable to form the sheet member 641 slightly larger so that the sheet member 641 projects from the end portion of the negative electrode substrate 621. By making the sheet member 641 project from the end portion of the negative electrode substrate 621, the sheet member 641 covers the negative electrode substrate 621 including the end portion of the negative electrode substrate 621 and hence, bending of the negative electrode plate 620B can be suppressed.

### (Modification 2)

Next, a modification 2 of the above-mentioned embodiment is described. Fig. 7B is a cross-sectional view showing the configuration of a positive electrode plate 610, a negative electrode plate 620B which forms an outermost layer, and a sheet member 642 of an electrode assembly 602 according to the modification 2 of the embodiment. To be more specific, Fig. 7B is a view corresponding to the configuration of the positive electrode plate 610, the negative electrode plate 620B which forms the outermost layer, and a sheet member 640 (640A) of the electrode assembly 600 shown in Fig. 6.

As shown in Fig. 7B, the electrode assembly 602 has a sheet member 642 in place of the sheet member 640 of the electrode assembly 600 in the above-mentioned embodiment. The modification 2 is substantially equal to the above-mentioned embodiment with respect to other configurations.

In this modification 2, the sheet member 642 has a first projecting portion 642a projecting from an end portion of a negative electrode substrate 621, and the first projecting portion 642a has a second projecting portion 642b projecting toward an inner surface side of the negative electrode substrate 621. That is, the first projecting portion 642a is a portion projecting from the end portion of the negative electrode substrate 621 in a direction along the negative electrode substrate 621 (on a plus side in a Y axis direction in Fig. 7B), and the second projecting portion 642b is a portion projecting toward the inner surface side of the negative electrode substrate 621 (on a minus side in an X axis direction in Fig. 7B). That is, the second projecting portion 642b of the sheet member 642 is formed by extending the first projecting portion 641a of the sheet member 641 in the above-mentioned modification toward the minus side in the X axis direction.

To be more specific, the second projecting portion 642b is disposed so as to cover the end portion of the negative electrode plate 620B on the plus side in the Y axis direction. With such a configuration, the sheet member 642 is formed such that the end portion (a portion of the second projecting portion 642b) has a greater (larger) thickness then a center portion. The first projecting portion 642a and the second projecting portion 642b may be formed over the whole circumference (all four sides) of the sheet member 642, or may be formed only a portion of the whole circumference (two sides, one side, a portion of one side or the like).

As described above, according to the energy storage device of this modification, the modification can acquire substantially the same advantageous effects as the above-mentioned embodiment. Particularly, by projecting the end portion of the sheet member 642 toward the inner surface side of the negative electrode substrate 621, the end portion does not project toward the outside whereby a strength of the end portion can be enhanced. Accordingly, bending of the negative electrode plate 620B can be suppressed more efficient while realizing miniaturization of the electrode assembly 602. Further, for example, in the case where the second projecting portion 642b is formed over the whole circumference of the sheet member 642, a strength of the sheet member 642 can be further enhanced. Although a force F1 shown in the drawing is applied to the end portion of the negative electrode plate 620B at the time of fixing the electrode assembly 602 by a fixing member 650, so long as the second projecting portion 642b is formed over the whole circumference of the sheet member 642, for example, bending of the end portion can be also suppressed.

### (Modification 3)

Next, a modification 3 of the above-mentioned embodiment is described. Fig. 7C is a cross-sectional view showing the configuration of a positive electrode plate 610, a negative electrode plate 620B which forms an outermost layer, and a sheet member 643 of an electrode assembly 603 according to the modification 3 of the embodiment. To be more specific, Fig. 7C is a view corresponding to the configuration of the positive electrode plate 610, the negative electrode plate 620B which forms the outermost layer, and the sheet member 640 (640A) of the electrode assembly 600 shown in Fig. 6.

As shown in Fig. 7C, the electrode assembly 603 has a sheet member 643 in place of the sheet member 640 of the electrode assembly 600 in the above-mentioned embodiment. The modification 3 is substantially equal to the above-mentioned embodiment with respect to other configurations.

In this modification 3, the sheet member 643 is formed such that an end portion of the sheet member 643 does not project from a negative electrode substrate 621, and the end portion has a greater (larger) thickness than a center portion. That is, by projecting the end portion of the sheet member 640 in the above-mentioned embodiment toward the outside (on a plus side in an X axis direction), a thick wall portion 643a having a larger wall thickness than other portions are formed on the sheet member 643. The thick wall portion 643a may be formed over the whole circumference (all four sides) of the sheet member 643 or may be formed only on a portion of the whole circumference (two side, one side, a portion of one side or the like).

As described above, the energy storage device according to this modification can acquire substantially the same advantageous effects as the above-mentioned embodiment. Particularly, the sheet member 643 is formed such that the end portion has the larger thickness than the center portion and hence, bending of the negative electrode plate 620B can be suppressed more effectively. Further, although a force such as F2 shown in the drawing is applied to the end portion of the negative electrode plate 620B at the time of fixing the electrode assembly 602 by a fixing member 650 or the like, bending of the end portion can be suppressed due to the thick wall portion 643a.

### (Modification 4)

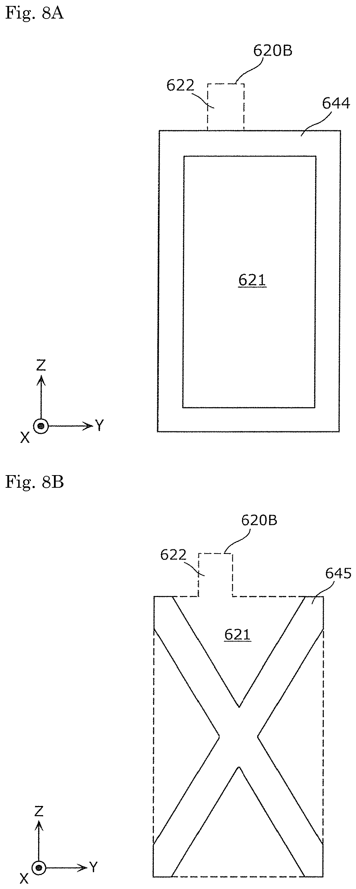

Next, a modification 4 of the above-mentioned embodiment is described. Fig. 8A and Fig. 8B are plan views showing the configuration of a negative electrode plate 620B which forms an outermost layer and a sheet member 644, 645 according to the modification 4 of the embodiment. To be more specific, Fig. 8A and Fig. 8B are views of the configurations where sheet members 644, 645 are disposed on the negative electrode plate 620B which forms the outermost layer as viewed from a plus side in an X axis direction. In these drawings, the negative electrode plate 620B is indicated by a dotted line for easily distinguishing the negative electrode plate 620B and the sheet members 644, 645 from each other.

As shown in Fig. 8A, the sheet member 644 is formed in an annular shape (O shape) along an outer periphery (outer edges on four sides) of a negative electrode substrate 621 of the negative electrode plate 620B. Further, as shown in Fig. 8B, the sheet member 645 is formed in an X shape on a negative electrode substrate 621 of the negative electrode plate 620B. A sheet member may be formed in a meshed shape or the sheet member may be applicable in other various shapes. Since the sheet member can be formed in various shapes, the degree of freedom in designing the sheet member can be enhanced.

### (Modification 5)

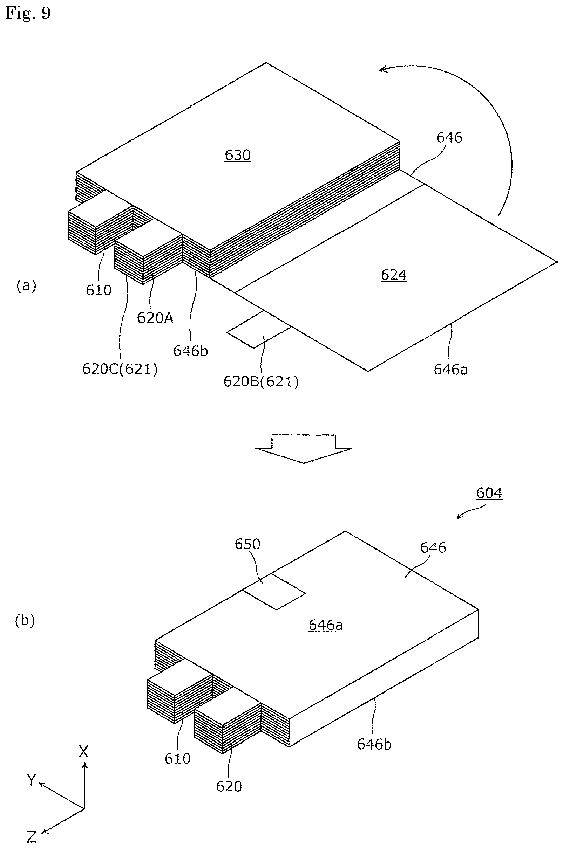

Next, a modification 5 of the above-mentioned embodiment is described. Fig. 9 is a perspective view showing the configuration of a positive electrode plate 610, a negative electrode plate 620, and a sheet member 646 of an electrode assembly 604 according to the modification 5 of the embodiment. To be more specific, (a) of Fig. 9 is a view showing a state where the sheet member 646 is in a developed state before the electrode assembly 604 is formed, and (b) of Fig. 9 is a view showing a state where the sheet member 646 is folded after the electrode assembly 604 is formed.

As shown in (a) of Fig. 9, the sheet member 646 has a first sheet portion 646a and a second sheet portion 646b, and the first sheet portion 646a and the second sheet portion 646b are integrally formed with each other. It this modification, the first sheet portion 646a is a portion fixed to an outer surface of a negative electrode substrate 621 of a negative electrode plate 620B which is a plate forming one outermost layer among a plurality of plates which form the electrode assembly 604. On the other hand, the second sheet portion 646b is a portion fixed to an outer surface of the negative electrode substrate 621 of a negative electrode plate 620C which is a plate forming the other outermost layer among the plurality of plates.

That is, in a state where the sheet member 646 is developed, the first sheet portion 646a is fixed to the outer surface of the negative electrode plate 620B, and the second sheet portion 646b is fixed to the outer surface of the negative electrode plate 620C. Then, the positive electrode plate 610, the negative electrode plate 620A and the separator 630 are stacked on the negative electrode plate 620C. Then, as shown in (b) of Fig. 9, by folding the sheet member 646, the negative electrode plate 620B to which the first sheet portion 646a is fixed is disposed on the stacked positive electrode plate 610, the negative electrode plate 620A and the separator 630. Then, by connecting the first sheet portion 646a and the second sheet portion 646b to each other by a fixing member 650, the positive electrode plate 610 and the negative electrode plate 620 are fixed to each other in the inside of the electrode assembly 604.

As described above, the energy storage device according to this modification can acquire substantially the same advantageous effects as the above-mentioned embodiment. Particularly, the first sheet portion 646a and the second sheet portion 646b are fixed to outer surfaces of the negative electrode substrates 621 of the negative electrode plates 620B and 620C which are plates forming the outermost layers on both outer sides of the electrode assembly 604 and hence, the first sheet portion 646a and the second sheet portion 646b on both outer sides are integrally formed. With such a configuration, two sheet portions on both outer sides of the electrode assembly 604 are integrally formed and hence, the number of parts can be reduced and the configuration of the electrode assembly 604 can be simplified. Further, when the sheet member 646 has insulation property, the sheet member 646 can also exhibit a function of an insulation sheet which covers the plurality of plates.

### (Modification 6)

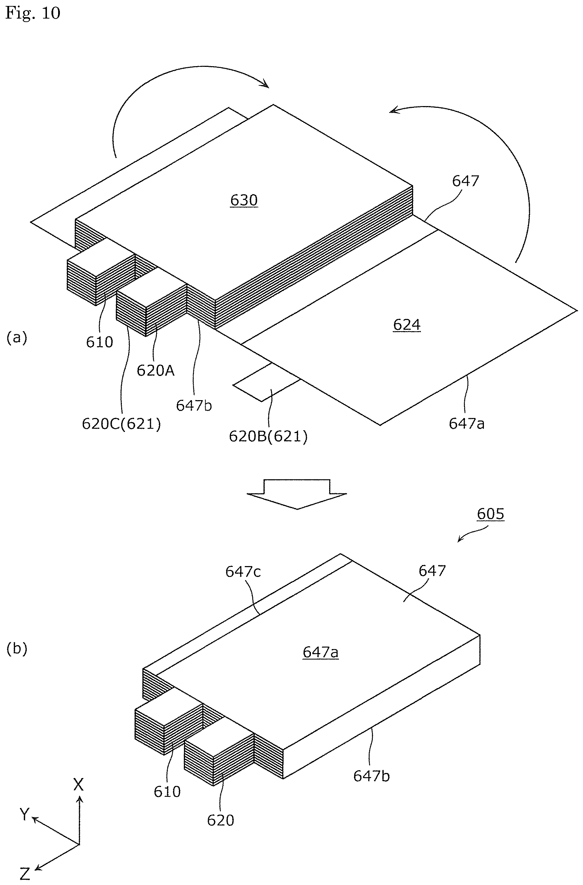

Next, a modification 6 of the above-mentioned embodiment is described. Fig. 10 is a perspective view showing the configuration of a positive electrode plate 610, a negative electrode plate 620, and a sheet member 647 of an electrode assembly 605 according to the modification 6 of the embodiment. To be more specific, (a) of Fig. 10 is a view showing a state where a sheet member 647 before the electrode assembly 605 is formed is developed, and (b) of Fig. 10 is a view showing a state where the sheet member 647 is folded after the electrode assembly 605 is formed.

As shown in (a) of Fig. 10, the sheet member 647 has a first sheet portion 647a and a second sheet portion 647b, and the first sheet portion 647a and the second sheet portion 647b are integrally formed with each other. That is, the sheet member 647 in this modification has substantially the same configuration as the sheet member 646 in the above-mentioned modification 5. However, in this modification 6, a length of the second sheet portion 647b in a Y axis direction is set longer than a corresponding length of the second sheet portion 646b in the modification 5.

With such a configuration, as shown in (b) of Fig. 10, by folding the sheet member 647, the sheet member 647 is wrapped around a positive electrode plates 610, negative electrode plates 620A and separators 630 stacked on each other. Then, by overlapping an end portion of the first sheet portion 647a and an end portion of the second sheet portion 647b and by thermally welding or adhering the end portions to each other, the positive electrode plate 610 and the negative electrode plate 620 are fixed in the inside of the electrode assembly 605. In this manner, the end portion of the first sheet portion 647a and the end portion of the second sheet portion 647b are connected to each other and integrally formed with each other thus forming the sheet member 647 having a bag shape (O shape).

As described above, the energy storage device according to this modification can acquire substantially the same advantageous effects as the above-mentioned embodiment. Particularly, both ends portion of the first sheet portion 647a and the second sheet portion 647b are connected to each other thus forming the sheet member 647 into a bag shape (O shape) and hence, it is unnecessary to connect the end portions of the sheet member 647 by an insulation tape or the like. Accordingly, the number of parts can be reduced so that the configuration of the electrode assembly 605 can be simplified. Further, by providing insulating property to the sheet member 647, the sheet member 647 can function also as an insulation sheet which covers the whole circumference of the plurality of plates and hence, the number of parts can be reduced.

Although the energy storage devices according to the embodiment of the present invention and the modifications of the embodiment have been described, the present invention is not limited to such an embodiment and the modifications of the embodiment. That is, it should be construed that the embodiment and the modifications of the embodiment disclosed this time are provided for an exemplifying purpose in all aspects and do not limit the preset invention. The scope of the present invention is not defined by the above-mentioned description but is defined by the claims.

For example, in the above-mentioned embodiment and the modifications of the embodiment, the plate which forms the outermost layer of the electrode assembly is formed of the negative electrode plate 620. However, the positive electrode plate 610 may be arranged on the outermost layer of the electrode assembly. In this case, when the positive electrode plate which forms the outermost layer is a both surface applied plate, lithium ion occluding ability of the negative electrode becomes insufficient compared to lithium ion supply ability of the positive electrode and hence, possibility of precipitation of metal lithium becomes relatively high. Accordingly, even when the plate which forms the outermost layer is the positive electrode plate, it is preferable that the positive electrode plate be a single surface applied plate.

In the above-mentioned embodiment and the modifications of the embodiment, with respect to the plate which forms the outermost layer of the electrode assembly, the mixture layer is disposed only the inner surface of the substrate. However, with respect to the plate which forms the outermost layer of the electrode assembly, a small amount of mixture material may be applied to an outer surface of the substrate.

In the above-mentioned embodiment and the modifications of the embodiment, with respect to the plate which forms the outermost layer, a ratio of a stress (F2) generated when a load is applied from a sheet member side with respect to a stress (F1) generated when a load is applied from a mixture layer side in a bending test in a state where the sheet member is fixed to the plate is set to 0.5 to 2 inclusive. However, the ratio of F2 with respect to F1 may be set to a value slightly smaller than 0.5 or may be set to a value slightly larger than 2.

In the above-mentioned embodiment and the modifications of the embodiment, rigidity of the sheet member is higher than rigidity of the mixture layer of the plate which forms the outermost layer and a thickness of the sheet member is smaller than a thickness of the mixture layer. However, rigidity of the sheet member is lower than rigidity of the mixture layer of the plate which forms the outermost layer and the thickness of the sheet member is smaller than the thickness of the mixture layer, or rigidity of the sheet member is higher than rigidity of the mixture layer of the plate which forms the outermost layer and the thickness of the sheet member is larger than the thickness of the mixture layer. The sheet member may have the same rigidity as the mixture layer of the plate which forms the outermost layer and the sheet member may have the same thickness as the mixture layer of the plate which forms the outermost layer. The sheet member may have lower rigidity than the rigidity of the mixture layer of the plate which forms the outermost layer and the sheet member may have a larger thickness than thickness of the mixture layer. Also with such configuration, the sheet member is fixed to the plate and hence, bending of the plate which forms the outermost layer can be suppressed.

In the above-mentioned embodiment and the modifications of the embodiment, the positive electrode plate 610 and the negative electrode plate 620 has a rectangular shape elongated in the Z axis direction. However, at least one of the positive electrode plate 610 and the negative electrode plate 620 is not limited to a rectangular shape elongated in the Z axis direction, and may be formed into other polygonal shapes, an elongated elliptical shape, an elongated circular shape and the like elongated in the Z axis direction, or may be formed into a shape elongated in the Y axis direction.

In the above-mentioned embodiment and the modifications of the embodiment, the electrode assembly has the fixing member 650 which fixes the positive electrode plates 610 and the negative electrode plates 620 in the stacking direction in a sandwiched manner. However, the electrode assembly may be configured such that the electrode assembly does not have the fixing member 650, and the positive electrode plates 610 and the negative electrode plates 620 are fixed to each other in the stacking direction by heat press or the like.

In the above-mentioned embodiment and the modifications of the embodiment, the positive electrode plates 610 and the negative electrode plates 620 have tabs 612 tabs 622 having a rectangular shape as connecting portions connected with the positive terminal 210 and the negative terminal 220. However, the shapes of the tab 612 and the tabs 622 are not particularly limited, and may be formed into any shapes such as polygonal shapes other than a rectangular shape, a semicircular shape, a semielongated circular shape, a semi-elliptical shape. Further, the positive electrode plates 610 and the negative electrode plates 620 may have the whole end portions of the plates as the connecting portions without adopting the projecting tabs.

In the above-mentioned embodiment and the modifications of the embodiment, the sheet member having the above-mentioned configuration is fixed to the plates which form the outermost layers on both sides of the electrode assembly. However, the sheet member having the above-mentioned configuration may be fixed to either one of the plates which form the outermost layers on both sides of the electrode assembly.

The configurations which are formed by arbitrarily combining the embodiment and the modifications of the embodiment also fall within the scope of the present invention.

The present invention is realized not only in the form of such an energy storage device but also in the form of a plate to which a sheet member is fixed or in the form of an electrode assembly having the plate.

### INDUSTRIAL APPLICABILITY

The present invention is applicable to an energy storage device such as a lithium ion secondary battery or the like.

### DESCRIPTION OF REFERENCE SIGNS

10: energy storage device
600, 601, 602, 603, 604, 605: electrode assembly
610: positive electrode plate
611: positive electrode substrate
613: positive electrode mixture layer
620, 620A, 620B, 620C: negative electrode plate
621: negative electrode substrate
623, 624: negative electrode mixture layer
640, 640A, 640B, 641, 642, 643, 644, 645, 646, 647: sheet member
641a, 642a: first projecting portion
642b: second projecting portion
643a: thick wall portion
646a, 647a: first sheet portion
646b, 647b: second sheet portion

## Claims

1. An energy storage device (10) comprising:
an electrode assembly (600, 601, 602, 603, 604, 605) having a plurality of plates stacked on each other,
wherein the plate which forms an outermost layer among the plurality of plates has a substrate and a mixture layer disposed on an inner surface of the substrate, and
the electrode assembly (600, 601, 602, 603, 604, 605) further has a sheet member (640, 640A, 640B, 641, 642, 643, 644, 645, 646, 647) fixed to an outer surface of the substrate, **characterized in that** the plate which forms the outermost layer is formed such that, in a state where the sheet member (640, 640A, 640B, 641, 642, 643, 644, 645, 646, 647) is fixed to the plate, a ratio of a stress when a load is applied to the plate from a sheet member (640, 640A, 640B, 641, 642, 643, 644, 645, 646, 647) side with respect to a stress when the load is applied to the plate from a mixture layer side in a bending test is set to 0.5 to 2 inclusive.

2. The energy storage device (10) according to claim 1, wherein the sheet member (640, 640A, 640B, 641, 642, 643, 644, 645, 646, 647) has a first projecting portion (641a, 642a) projecting from an end portion of the substrate.

3. The energy storage device (10) according to claim 2, wherein the first projecting portion (641a, 642a) has a second projecting portion (642b) projecting toward an inner surface side of the substrate.

4. The energy storage device (10) according to any one of claims 1 to 3,
wherein the sheet member (640, 640A, 640B, 641, 642, 643, 644, 645, 646, 647) is formed such that the end portion of the sheet member (640, 640A, 640B, 641, 642, 643, 644, 645, 646, 647) has a larger thickness than a center portion of the sheet member (640, 640A, 640B, 641, 642, 643, 644, 645, 646, 647).

5. The energy storage device (10) according to any one of claims 1 to 4,
wherein the sheet member (640, 640A, 640B, 641, 642, 643, 644, 645, 646, 647) includes:
a first sheet portion (646a, 647a) fixed to an outer surface of the substrate of the plate forming one outermost layer among the plurality of plates; and
a second sheet portion (646b, 647b) fixed to an outer surface of the substrate of the plate forming the other outermost layer among the plurality of plates, wherein
the first sheet portion (646a, 647a) and the second sheet portion (646b, 647b) are integrally formed with each other.

6. The energy storage device (10) according to any one of claims 1 to 5, wherein a thickness of the sheet member (640, 640A, 640B, 641, 642, 643, 644, 645, 646, 647) is set thinner than a thickness of the mixture layer.

## Patentansprüche

1. Energiespeichervorrichtung (10), umfassend:
eine Elektrodenanordnung (600, 601, 602, 603, 604, 605) mit einer Mehrzahl von aufeinander gestapelten Platten,
wobei die Platte, welche eine äußerste Schicht von der Mehrzahl der Platten bildet, ein Substrat und
eine Mischungsschicht aufweist, die auf einer inneren Oberfläche des Substrats angeordnet ist, und die Elektrodenanordnung (600, 601, 602, 603, 604, 605) des Weiteren ein Lagenelement (640, 640A, 640B, 641, 642, 643, 644, 645, 646, 647) aufweist, das an einer äußeren Oberfläche des Substrats fixiert ist, **dadurch gekennzeichnet, dass** die Platte, welche die äußerste Schicht bildet, so gebildet ist, dass in einem Zustand, in dem das Lagenelement (640, 640A, 640B, 641, 642, 643, 644, 645, 646, 647) an der Platte fixiert ist, ein Verhältnis einer mechanischen Spannung, wenn eine Last auf die Platte von der Lagenelementseite (640, 640A, 640B, 641, 642, 643, 644, 645, 646, 647) angewendet wird, bezogen auf eine mechanische Spannung, wenn die Last auf die Platte von einer Mischungsschichtseite angewendet wird, in einem Biegetest auf 0,5 bis 2 einschließlich festgelegt wird.

2. Energiespeichervorrichtung (10) nach Anspruch 1, wobei das Lagenelement (640, 640A, 640B, 641, 642, 643, 644, 645, 646, 647) einen ersten vorspringenden Anteil (641a, 642a) aufweist, der von einem Endanteil des Substrats vorspringt.

3. Energiespeichervorrichtung (10) nach Anspruch 2, wobei der erste vorspringende Anteil (641a, 642a) einen zweiten vorspringenden Anteil (642b) aufweist, der zu einer inneren Oberflächenseite des Substrats vorspringt.

4. Energiespeichervorrichtung (10) nach einem der Ansprüche 1 bis 3, wobei das Lagenelement (640, 640A, 640B, 641, 642, 643, 644, 645, 646, 647) so gebildet ist, dass der Endanteil des Lagenelements (640, 640A, 640B, 641, 642, 643, 644, 645, 646, 647) eine größere Dicke als ein Mittelanteil des Lagenelements (640, 640A, 640B, 641, 642, 643, 644, 645, 646, 647) aufweist.

5. Energiespeichervorrichtung (10) nach einem der Ansprüche 1 bis 4, wobei das Lagenelement (640, 640A, 640B, 641, 642, 643, 644, 645, 646, 647) einschließt:
einen ersten Lagenanteil (646a, 647a), der an einer äußeren Oberfläche des Substrats der Platte fixiert ist, die eine äußerste Schicht von der Mehrzahl der Platten bildet; und
einen zweiten Lagenanteil (646b, 647b), der an einer äußeren Oberfläche des Substrats der Platte fixiert ist, die die andere äußerste Schicht von der Mehrzahl der Platten bildet; und wobei der erste Lagenanteil (646a, 647a) und der zweite Lagenanteil (646b, 647b) integral miteinander gebildet sind.

6. Energiespeichervorrichtung (10) nach einem der Ansprüche 1 bis 5, wobei eine Dicke des Lagenelements (640, 640A, 640B, 641, 642, 643, 644, 645, 646, 647) dünner als eine Dicke der Mischungsschicht festgelegt ist.

## Revendications

1. Dispositif de stockage d'énergie (10) comprenant :
un ensemble d'électrodes (600, 601, 602, 603, 604, 605) ayant une pluralité de plaques empilées les unes sur les autres,
la plaque qui forme une couche la plus à l'extérieur parmi la pluralité de plaques ayant un substrat et une couche de mélange disposée sur une surface interne du substrat, et
l'ensemble d'électrodes (600, 601, 602, 603, 604, 605) comportant en outre un élément de feuille (640, 640A, 640B, 641, 642, 643, 644, 645, 646, 647) fixé sur une surface extérieure du substrat, **caractérisé en ce que** la plaque qui forme la couche la plus à l'extérieur est formée de telle sorte que, dans un état où l'élément de feuille (640, 640A, 640B, 641, 642, 643, 644, 645, 646, 647) est fixé à la plaque, un rapport d'une contrainte lorsqu'une charge est appliquée à la plaque du côté de l'élément de feuille (640, 640A, 640B, 641, 642, 643, 644, 645, 646, 647) et une contrainte lorsque la charge est appliquée à la plaque du côté de la couche de mélange lors d'un essai de flexion est fixé de 0,5 à 2 inclus.

2. Dispositif de stockage d'énergie (10) selon la revendication 1, l'élément de feuille (640, 640A, 640B, 641, 642, 643, 644, 645, 646, 647) ayant une première partie saillante (641a, 642a) faisant saillie à partir d'une partie d'extrémité du substrat.

3. Dispositif de stockage d'énergie (10) selon la revendication 2, la première partie saillante (641a, 642a) ayant une deuxième partie saillante (642b) faisant saillie vers un côté de surface intérieure du substrat.

4. Dispositif de stockage d'énergie (10) selon l'une quelconque des revendications 1 à 3, l'élément de feuille (640, 640A, 640B, 641, 642, 643, 644, 645, 646, 647) étant formé de telle sorte que la partie d'extrémité de l'élément de feuille (640, 640A, 640B, 641, 642, 643, 644, 645, 646, 647) a une épaisseur supérieure à celle d'une partie centrale de l'élément de feuille (640, 640A, 640B, 641, 642, 643, 644, 645, 646, 647).

5. Dispositif de stockage d'énergie (10) selon l'une quelconque des revendications 1 à 4, l'élément de feuille (640, 640A, 640B, 641, 642, 643, 644, 645, 646, 647) comprenant :
une première partie de feuille (646a, 647a) fixée à une surface extérieure du substrat de la plaque formant une couche la plus à l'extérieur parmi la pluralité de plaques ; et
une deuxième partie de feuille (646b, 647b) fixée à une surface extérieure du substrat de la plaque formant l'autre couche la plus à l'extérieur parmi la pluralité de plaques,
la première partie de feuille (646a, 647a) et la deuxième partie de feuille (646b, 647b) étant formées d'une seule pièce l'une avec l'autre.

6. Dispositif de stockage d'énergie (10) selon l'une quelconque des revendications 1 à 5, une épaisseur de l'élément de feuille (640, 640A, 640B, 641, 642, 643, 644, 645, 646, 647) étant définie plus fine qu'une épaisseur de la couche de mélange.
